# EUROPÄISCHE PATENTSCHRIFT

(11) **EP 2 816 537 B1**
(45) Veröffentlichungstag und Bekanntmachung des Hinweises auf die Patenterteilung: **09.10.2024**
(21) Anmeldenummer: 13173379.2
(22) Anmeldetag: 24.06.2013
(51) Int. Cl.: G07G 1/00, G07G 3/00

(54) **KASSENSYSTEM UND VERFAHREN ZUM BETREIBEN EINES KASSENSYSTEMS**
CHECK OUT REGISTER SYSTEM AND METHOD FOR OPERATING A CHECK OUT REGISTER SYSTEM
SYSTÈME DE CAISSE ET PROCÉDÉ DE FONCTIONNEMENT D'UN SYSTÈME DE CAISSE

(30) Priorität: 21.06.2013 EP 13173301
(43) Veröffentlichungstag der Anmeldung: 24.12.2014
(73) Patentinhaber: Diebold Nixdorf Systems GmbH, 33106 Paderborn (DE)
(72) Erfinder: Jungclaus, Kai, 40764 Langenfeld (DE)

(56) Entgegenhaltungen:
- DE-A1- 19 839 977
- JP-A- 2001 126 143
- JP-A- H09 319 963
- JP-A- H10 143 761
- JP-A- S57 100 556
- US-A- 4 595 985
- US-A1- 2009 299 866
- US-A1- 2015 034 398
- ANONYMOUS: "Messabweichung - Wikipedia", 27 March 2013 (2013-03-27), XP055710265, Retrieved from the Internet <URL:https://de.wikipedia.org/w/index.php?title=Messabweichung&oldid=115959867> [retrieved on 20200630]
- H UNBEHAUEN: "Regelungs-und Steuerungstechnik / Regelungstechnik, 13 Weitere Reglerentwurfsverfahren", HÜTTE - DAS INGENIEURWISSEN, 7 December 2012 (2012-12-07), pages 1443 - 1449, XP055710553, ISBN: 978-3-642-22850-6, Retrieved from the Internet <URL:http://ebookcentral.proquest.com/lib/epo-ebooks/detail.action?docID=994223> [retrieved on 20200701]

## Beschreibung

Die Erfindung betrifft ein Kassensystem nach dem Oberbegriff des Anspruchs 1 sowie ein Verfahren zum Betreiben eines Kassensystems.

Ein derartiges Kassensystem umfasst eine Kasseneinrichtung zum Durchführen eines Bezahlvorgangs und eine Geldlade mit einem Aufbewahrungsfach zum Aufbewahren von Geld. In einem geöffneten Zustand der Geldlade ist das Aufbewahrungsfach geöffnet, so dass Geld in das Aufbewahrungsfach hinein getan oder aus dem Aufbewahrungsfach entnommen werden kann. In einem geschlossenen Zustand der Geldlade ist das Aufbewahrungsfach geschlossen, so dass ein Zugriff auf Geld im Aufbewahrungsfach nicht möglich ist. Eine Steuereinrichtung ist vorgesehen, um die Geldlade zu steuern, indem die Steuereinrichtung insbesondere bei Vorliegen vorbestimmter Bedingungen ein Steuersignal zum Öffnen der Geldlade erzeugt. Mittels einer Sensoreinrichtung kann dann erkannt werden, ob die Geldlade geöffnet ist, wobei die Sensoreinrichtung ausgebildet ist, ein Öffnungssignal zu erzeugen, das anzeigt, ob die Geldlade sich in ihrem geöffneten Zustand befindet.

Bei einem aus der DE 34 07 674 C2 bekannten Kassensystem in Form einer elektronischen Registrierkasse ist eine Steuereinrichtung in Form einer zentralen Verarbeitungseinheit (CPU) vorgesehen, die einen Befehl an einen Antrieb zum automatischen Öffnen einer Geldlade abgibt. Die Steuereinrichtung ist dabei dazu ausgebildet, einen Öffnungsvorgang zu initiieren, wenn nach erfolgtem Registrieren von Waren ein Bezahlvorgang vorgenommen werden soll, im Rahmen dessen ein Bediener beispielsweise Bargeld aus der Geldlade entnimmt und einem Kunden aushändigt. Die Geldlade wird anschließend durch den Bediener manuell geschlossen.

Bei einem herkömmlichen Kassensystem stellt sich ein Bezahlvorgang in der Regel so dar, dass ein Bediener Waren registriert und dafür beispielsweise auf Waren angebrachte Barcodes mittels eines geeigneten Lesegeräts einliest oder Warenkennungen manuell in eine Eingabevorrichtung des Kassensystems eingibt. Nach erfolgter Registrierung der Waren erzeugt die Steuereinrichtung ein Steuersignal zum Öffnen der Geldlade, die daraufhin automatisch geöffnet wird, so dass der Bediener Geld in das Aufbewahrungsfach der Geldlade einlegen oder aus dem Aufbewahrungsfach entnehmen kann. Nach erfolgtem Bezahlvorgang wird die Geldlade manuell durch den Bediener geschlossen, so dass ein weiterer Bezahlvorgang initiiert werden kann.

Bei herkömmlichen Kassensystemen wird mittels einer Sensoreinrichtung erfasst, ob die Geldlade auch korrekt nach einem durchgeführten Bezahlvorgang wieder geschlossen worden ist. Die Sensoreinrichtung kann hierzu beispielsweise ein Öffnungssignal in Form eines erhöhten Sensorsignalpegels erzeugen, das solange anliegt, wie die Geldlade geöffnet ist. Fällt das Öffnungssignal ab, kann hieraus darauf geschlossen werden, dass die Geldlade geschlossen worden ist.

Bei solchen Kassensystemen ist eine Manipulation gegebenenfalls dadurch möglich, dass ein fremder Gegenstand mit der beispielsweise als Mikroschalter oder Mikrokontakt ausgebildeten Sensoreinrichtung in Kontakt gebracht und dadurch eine geschlossene Geldlade vorgetäuscht wird, so dass das Öffnungssignal der Sensoreinrichtung abfällt. Obwohl das Sensorsignal damit auf eine geschlossene Geldlade hindeutet, ist die Geldlade in Wirklichkeit weiterhin geöffnet, ohne dass dies durch das Kassensystem erkannt wird. Bei geöffneter Geldlade kann ein Manipulateur dann auf in der Geldlade befindliches Geld zugreifen.

Die US2009/299866 A1 beschreibt ein Kassensystem, bei dem eine Steuereinrichtung eine Geldlade in elektronischer Weise zum Öffnen ansteuert. Dies erfolgt über einen Pin, über den ein elektromagnetischer Schalter zum Öffnen der Geldlade angesteuert werden kann. Die US2009/299866 A1 betrifft hierbei ein System, bei dem ein Öffnungszustand der Geldlade sensorisch erfasst werden soll. Hierbei wird ein XOR-Gatter verwendet, das mit einem MOS-Transistor und mit einem Mikroschalter verbunden ist. Wenn die Geldlade geschlossen ist, ist der MOS-Transistor angeschaltet und der Mikroschalter geöffnet, sodass sich ein Ausgangsanschluss des XOR-Gatters damit auf einer logischen Eins ("logic Hi") befindet. Ist die Geldlade hingegen geöffnet, befindet sich der Ausgangsanschluss des XOR-Gatters auf null ("logic Lo"). Auf diese Weise kann erkannt werden, ob die Geldlade geöffnet oder geschlossen ist.

Die JP H10 143761 A beschreibt ein System, bei dem geprüft wird, ob das Öffnen einer Geldlade aufgrund eines Registrierungsvorgangs ("registering job") erfolgt oder durch eine Schlüsseloperation ("key operation"), also durch Verwenden eines Schlüssels unabhängig von einem Registrierungsvorgang. Erfolgt das Öffnen durch eine Schlüsseloperation, wird eine Warnung erzeugt.

Die DE 198 39 977 A1 beschreibt eine Geldkassettenanordnung, bei der eine Registrierkasse nach einem Rechnungsabschluss ein Betätigungssignal sendet, um einen Kassettendeckel zu öffnen. Der Kassettendeckel wird dadurch entriegelt, und ein Schaltelement gibt ein Meldesignal "Geldkassette geöffnet" an eine Überwachungseinrichtung ab, die dieses Meldesignal innerhalb eines bestimmten Zeitraums erwartet hat und deshalb keinen Alarm auslöst.

Aufgabe der vorliegenden Erfindung ist es, ein Kassensystem sowie ein Verfahren zum Betreiben eines Kassensystems zur Verfügung zu stellen, die auf einfache, kostengünstige Weise das Erkennen eines Manipulationsvorgangs beim Öffnen und/oder Schließen einer Geldlade ermöglichen.

Diese Aufgabe wird durch einen Gegenstand mit Merkmalen des Anspruchs 1 gelöst.

Demgemäß ist die Steuereinrichtung ausgebildet, auszuwerten, ob einem Öffnungssignal ein Steuersignal mit vorbestimmtem zeitlichen Abstand vorangegangen ist oder nicht, um anhand der Auswertung einen Manipulationsvorgang beim Öffnen und/oder Schließen der Geldlade zu erkennen.

Die vorliegende Erfindung geht von der Erkenntnis aus, dass gewöhnlich ein Öffnen der Geldlade innerhalb einer vorbestimmten Zeit nach einem Steuersignal der Steuereinrichtung erfolgt, mit dem die Steuereinrichtung die Geldlade zum Öffnen des Aufbewahrungsfachs ansteuert. Mittels des Steuersignals wird ein Antrieb der Geldlade beispielsweise zum Ausfahren einer Schublade, die das Aufbewahrungsfach beinhaltet, oder zum Öffnen einer Klappe, die das Aufbewahrungsfach verdeckt, betätigt, wobei es sich bei dem Antrieb beispielsweise um einen elektromotorischen Antrieb oder einen mechanischen Federantrieb handeln kann. Gibt die Steuereinrichtung ein Steuersignal an die Geldlade ab, wird die Geldlade typischerweise innerhalb einer vorbestimmten Zeit nach dem Ansteuern durch das Steuersignal geöffnet, so dass das Öffnungssignal innerhalb dieser vorbestimmten Zeit vorliegt.

Hieraus folgt im Umkehrschluss, dass ein Öffnungssignal, das zu früh oder zu spät nach einem Steuersignal oder völlig unabhängig von einem Steuersignal erfasst wird, auf einen Manipulationsvorgang hindeuten kann, bei dem die Geldlade mit möglicherweise krimineller Absicht geöffnet oder offen gehalten wird. Entsprechend kann anhand einer Auswertung, ob einem Öffnungssignal ein Steuersignal mit vorbestimmtem zeitlichen Abstand vorausgegangen ist, erkannt werden, ob gegebenenfalls ein Manipulationsvorgang vorliegt.

Das Steuersignal weist in der Regel die Form eines Steuerimpulses auf, den die Steuereinrichtung abgibt, um auf diese Weise das Öffnen der Geldlade zu bewirken. Das Öffnungssignal entspricht einem Signal, das die Sensoreinrichtung bei geöffneter Geldlade erzeugt und stellt sich beispielsweise als erhöhter Signalpegel eines durch die Sensoreinrichtung erzeugten Sensorsignals dar. Liegt das Öffnungssignal vor, zeigt dies den geöffneten Zustand der Geldlade an. Fällt der Signalpegel des Sensorsignals ab und liegt somit das Öffnungssignal nicht länger vor, so deutet dies auf eine geschlossene Geldlade (oder eine manipulierte Sensoreinrichtung) hin.

Unter einem vorbestimmten zeitlichen Abstand ist insbesondere eine Referenzzeit (+/eine Toleranz) zu verstehen, um die das Öffnungssignal typischerweise einem Steuersignal nachfolgt. Weicht die Zeitpanne zwischen dem Steuersignal und dem Beginn des Öffnungssignals von einer Referenzzeitspanne ab oder tritt ein Öffnungssignal unabhängig von einem Steuersignal auf, so deutet dies auf einen Manipulationsvorgang hin.

Die Steuereinrichtung ist entsprechend ausgebildet, eine Zeitspanne zwischen einem erzeugten Steuersignal und einem durch die Sensoreinrichtung erzeugten Öffnungssignal zu erfassen und zum Erfassen eines Manipulationsvorgangs mit einer vorbestimmten Referenzzeitspanne zu vergleichen. Liegt die erfasste Zeitspanne außerhalb eines Toleranzbereichs um diese Referenzzeitspanne, so kann dies auf einen Manipulationsvorgang hindeuten, der entsprechend angezeigt werden kann. Das Öffnungssignal folgt hierbei dem Steuersignal nach. Kommt es jedoch zu früh oder zu spät nach einem Steuersignal und weicht in unzulässiger Weise von der Referenzzeitspanne (die die typischerweise zum Öffnen der Geldlade erforderliche Zeitspanne anzeigt) ab, so wird dies als Manipulationsvorgang gewertet und entsprechend angezeigt.

Die Steuereinrichtung ist ausgebildet, die Zeitspanne zwischen einer ansteigenden Flanke des Steuersignals und einer ansteigenden Flanke des Öffnungssignals zu messen. Dadurch, dass anhand der ansteigenden Flanken des Steuersignals und des Öffnungssignals der zeitliche Abstand zwischen dem Steuersignal und dem Öffnungssignal bestimmt wird, erfolgt die Messung des zeitlichen Abstands zwischen definierten Zeitpunkten.

Die Steuereinrichtung kann auch ausgebildet sein, einen Manipulationsvorgang anzuzeigen, wenn einem Öffnungssignal kein Steuersignal unmittelbar vorangegangen ist.

Die Auswertung des zeitlichen Abstands zwischen einem Steuersignal und einem Öffnungssignal ermöglicht ein Erkennen eines etwaigen Manipulationsvorgangs dadurch, dass ein Bediener, der beispielsweise einen fremden Gegenstand der Sensoreinrichtung angenähert hat, um beispielsweise einen Mikroschalter oder Mikrokontakt zu betätigen und dadurch eine geschlossene Geldlade vorzutäuschen, das Entfernen dieses fremden Gegenstands unabhängig von einem Steuersignal oder zumindest abweichend von der Referenzzeitspanne nach dem Steuersignal vornehmen wird. Hat ein Nutzer die Sensoreinrichtung manipuliert und hebt einen Manipulationszustand wieder auf, erzeugt dies ein Öffnungssignal, das unabhängig von einem Steuersignal oder mit von der Referenzzeitspanne abweichender Zeit nach einem Steuersignal erfolgt, so dass durch Prüfen, ob dem Öffnungssignal ein Steuersignal mit vorbestimmtem zeitlichen Abstand vorangegangen ist oder nicht, gegebenenfalls ein Manipulationsvorgang erkannt werden kann.

Die Steuereinrichtung ist selbstlernend ausgebildet. Dazu passt die Steuereinrichtung die Referenzzeitspanne und/oder einen Toleranzbereich um die Referenzzeitspanne herum an, wenn sie erkennt, dass sich beispielsweise die Zeit, die zwischen dem Steuersignal und dem Öffnungssignal beim Öffnen der Geldlade liegt, sich z.B. aufgrund altersbedingter Veränderungen, beispielsweise aufgrund Verschleiß oder dergleichen, ändert. Wird festgestellt, dass bei bestimmungsgemäßer Öffnung der Geldlade, initiiert durch ein Steuersignal, mehr Zeit zum Öffnen der Geldlade erforderlich ist oder generell sich die Zeit, bis die Geldlade nach Ergehen des Steuersignals geöffnet ist, ändert, so kann die Referenzzeitspanne oder auch die zulässige Toleranz um die Referenzzeitspanne entsprechend angepasst werden, so dass solche beispielsweise alterungsbedingten Änderungen berücksichtigt werden können. Die Steuereinrichtung kann solche zeitlichen Änderungen über einen Zeitraum, beispielsweise über eine vorbestimmte Anzahl von Öffnungsvorgängen, hinweg betrachten, um die Referenzzeitspanne oder den Toleranzbereich anzupassen, wenn eine zeitliche Änderung in der Öffnungszeit als wiederkehrend und damit systemimmanent erkannt wird.

Die Erkennung eines eventuellen Manipulationsvorgangs kann auf die beschriebene Weise unter Verwendung von bei einem Kassensystem herkömmlich ohnehin vorhandenen Mitteln, insbesondere einer Sensoreinrichtung und einer Steuereinrichtung, erfolgen. Die Manipulationserkennung kann damit einfach und kostengünstig umgesetzt werden und ermöglicht eine zuverlässige Erkennung eines Manipulationsvorgangs.

Die Geldlade ist vorzugsweise von der Kasseneinrichtung entnehmbar und kann somit zusammen mit dem darin angeordneten Aufbewahrungsfach in modularer Weise beispielsweise in einen Aufnahmeschlitz der Kasseneinrichtung eingesteckt und auch wieder von diesem entnommen werden. Jedem Kassierer kann hierbei beispielsweise eine Geldlade zugeordnet sein, die er nach Gebrauch an einer Kasseneinrichtung entnehmen und beispielsweise in einem Tresor lagern kann.

Die Geldlade ist vorzugsweise über eine elektrische Datenleitung mit der Kasseneinrichtung verbunden. Über die elektrische Datenleitung kann die Steuereinrichtung beispielsweise ein Steuersignal an die Geldlade übertragen und auch das Öffnungssignal der an der Geldlade angeordneten Sensoreinrichtung abfragen. Die elektrische Datenleitung kann beispielsweise durch eine mehradrige Datenleitung gebildet sein, wobei die Geldlade beispielsweise durch eine Steckerverbindung, beispielsweise unter Verwendung eines RJ11- oder RJ12-Steckers, elektrisch an die Kasseneinrichtung angeschlossen sein kann.

Bei einem erkannten Manipulationsvorgang kann die Steuereinrichtung beispielsweise den Manipulationsvorgang protokollieren, wobei anhand einer Kassensoftware eine an der Kasseneinrichtung angemeldete Person gegebenenfalls dem Manipulationsvorgang zugeordnet werden kann.

Die Steuereinrichtung kann auch dazu ausgebildet sein, einen (stillen oder lauten) Alarm auszulösen, indem ein akustisches Alarmsignal ertönt oder eine geeignete Stelle, beispielsweise Sicherheitspersonal innerhalb eines Ladengeschäfts oder ein Sicherheitsdienst außerhalb eines Ladengeschäfts, alarmiert wird.

Die Steuereinrichtung kann auch ausgebildet sein, bei Erkennen eines Manipulationsvorgangs ein Alarmsystem zum Erzeugen eines Alarms anzusteuern. Die Steuereinrichtung wirkt dazu beispielsweise mit einer Alarmanlage innerhalb eines Ladengeschäfts zusammen, die ein akustisches Alarmsignal ausgeben oder über eine geeignete Telekommunikationsverbindung Sicherheitspersonal innerhalb oder außerhalb eines Ladengeschäfts alarmieren kann.

Die Steuereinrichtung kann zudem ausgebildet sein, mit einer Überwachungseinrichtung zusammenzuwirken, um bei Erkennen eines Manipulationsvorgangs die Überwachungseinrichtung zum Überwachen des Kassensystems zu aktivieren. Die Überwachungseinrichtung, die beispielsweise durch eine oder mehrere Kameras innerhalb eines Ladengeschäfts gebildet sein kann, kann somit das Kassensystem und eventuell daran tätige Bediener aufzeichnen, um einen Manipulationsvorgang gegebenenfalls bildlich festzuhalten.

Die Aufgabe wird auch durch ein Verfahren zum Betreiben eines Kassensystems gelöst, das eine Kasseneinrichtung zum Durchführen eines Bezahlvorgangs und eine Geldlade mit einem Aufbewahrungsfach zum Aufbewahren von Geld aufweist. In einem geöffneten Zustand der Geldlade ist das Aufbewahrungsfach für einen Zugriff geöffnet. In einem geschlossenen Zustand der Geldlade hingegen ist das Aufbewahrungsfach geschlossen, so dass nicht auf Geld innerhalb des Aufbewahrungsfachs zugegriffen werden kann. Eine Steuereinrichtung erzeugt ein Steuersignal zum Öffnen der Geldlade, und eine Sensoreinrichtung erzeugt ein Öffnungssignal, das anzeigt, ob die Geldlade sich in ihrem geöffneten Zustand befindet. Dabei ist vorgesehen, dass die Steuereinrichtung auswertet, ob einem Öffnungssignal ein Steuersignal mit vorbestimmtem zeitlichen Abstand vorangegangen ist oder nicht, um anhand der Auswertung einen Manipulationsvorgang beim Öffnen und/oder Schließen der Geldlade zu erkennen, wobei die Steuereinrichtung eine Zeitspanne zwischen einer ansteigenden Flanke eines durch die Sensoreinrichtung erzeugten Öffnungssignals und einer ansteigenden Flanke eines vorangegangenen Steuersignals zum Öffnen der Geldlade erfasst und zum Erfassen eines Manipulationsvorgangs mit einer vorbestimmten Referenzzeitpanne vergleicht, wobei die Steuereinrichtung einen Manipulationsvorgang anzeigt, wenn eine erfasste Zeitspanne zwischen einem durch die Sensoreinrichtung erzeugten Öffnungssignal und einem vorangegangenen Steuersignal zum Öffnen der Geldlade außerhalb eines zulässigen Toleranzbereichs um die Referenzzeitspanne liegt und die Steuereinrichtung selbstlernend ausgebildet ist, die Referenzzeitspanne und/oder einen Toleranzbereich anzupassen, wenn sie über einen Zeitraum eine Veränderung in einem bestimmungsgemäßen Öffnungsvorgang der Geldlade erkennt.

Die vorangehend für das Kassensystem beschriebenen Vorteile und vorteilhaften Ausgestaltungen finden analog auch auf das Verfahren Anwendung, so dass auf das oben Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Kassensystems mit einer Kasseneinrichtung und einer Geldlade;
- Fig. 2: eine schematische Blockansicht des Kassensystems;
- Fig. 3: eine Ansicht eines Steckers einer elektrischen Datenleitung zur Verbindung der Geldlade mit der Kasseneinrichtung;
- Fig. 4: eine zeitliche Darstellung von Signalen einer Steuereinrichtung und einer Sensoreinrichtung; und
- Fig. 5: eine grafische Darstellung einer Zeitspanne zwischen einem Steuersignal der Steuereinrichtung und einem Öffnungssignal der Sensoreinrichtung in Relation zu einer Referenzzeitspanne.

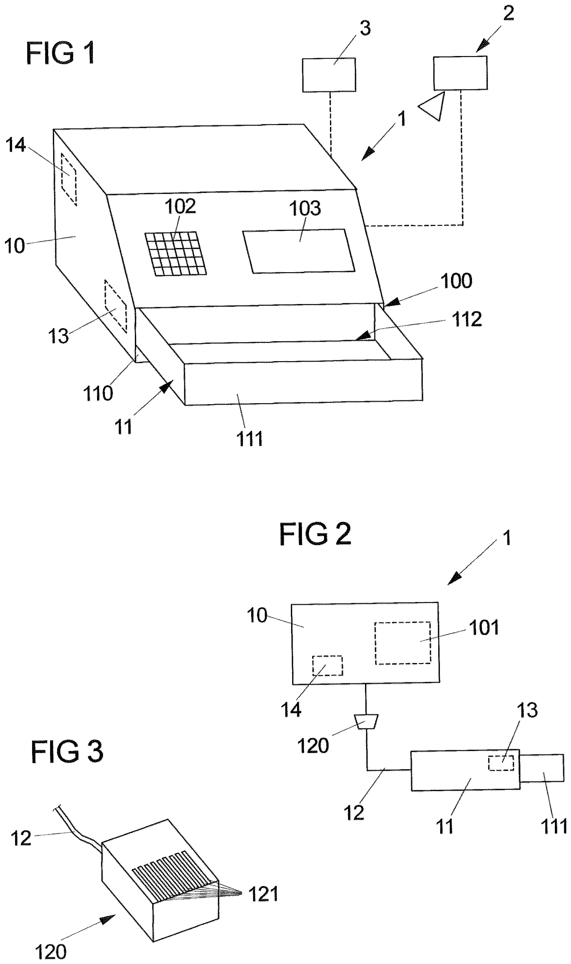

Fig. 1 zeigt in einer schematischen Ansicht ein Kassensystem 1, das eine Kasseneinrichtung 10 und eine an der Kasseneinrichtung 10 angeordnete Geldlade 11 mit einer verstellbaren Schublade 111 und einem darin angeordneten Aufbewahrungsfach 112 zur Aufbewahrung von Bargeld aufweist.

Die Kasseneinrichtung 10 weist beispielsweise eine (in Fig. 2 schematisch dargestellte) Registriereinrichtung 101 zum Einscannen von Barcodes von Waren, eine Eingabeeinrichtung 102 zum Eintippen einer Warenkennung und eine Anzeigeeinrichtung 103 in Form eines Bildschirms zum Anzeigen von warenbezogenen Informationen, eines zu zahlenden Betrags oder dergleichen auf.

Die Kasseneinrichtung 10 weist eine Steuereinrichtung 14 auf, die zum Steuern eines Bezahlvorgangs und auch zum Steuern der Geldlade 11, insbesondere zum automatischen Öffnen der Schublade 111 der Geldlade 11, ausgestaltet ist.

Weiterhin ist an der Geldlade 11 eine Sensoreinrichtung 13 vorgesehen, die beispielsweise als Mikroschalter oder Mikrokontakt ausgebildet ist und dazu dient, zu detektieren, ob sich die Schublade 111 der Geldlade 11 in einem geöffneten Zustand, in dem ein Zugriff auf das in der Schublade 11 befindliche Aufbewahrungsfach 112 möglich ist, oder in einem geschlossenen Zustand, in dem die Schublade 111 in ein Gehäuse 110 der Geldlade 11 eingefahren ist, befindet.

Die Geldlade 11 ist vorzugsweise als modulare Baueinheit ausgestaltet und mit ihrem Gehäuse 110 in einen Aufnahmeschlitz 100 der Kasseneinrichtung 10 lösbar eingeschoben. Die Geldlade 11 ist, wie schematisch in Fig. 2 dargestellt, über eine elektronische Datenleitung 12 und eine Steckerverbindung 120 beispielsweise unter Verwendung eines RJ11- oder RJ12-Steckers mit der Kasseneinrichtung 10 verbunden und steht somit für eine elektrische Kommunikation mit der Kasseneinrichtung 10 in Verbindung.

Fig. 3 zeigt schematisch einen Stecker der Steckerverbindung 120. Der Stecker weist in dem dargestellten Beispiel sechs Pins 121 auf, über die eine Versorgungsspannung an die Geldlade 11 übertragen wird, Steuersignale der Steuereinrichtung 14 an die Geldlade 11 geleitet werden und Sensorsignale der Sensoreinrichtung 13 abgefragt werden können.

Ein gewöhnlicher Bezahlvorgang mittels eines Kassensystems 1 der in Fig. 1 und 2 dargestellten Art stellt sich beispielsweise wie folgt dar.

Zunächst werden mittels der Registriereinrichtung 101 Barcodes einer Anzahl von Waren eingelesen und dadurch die Waren registriert. Alternativ oder zusätzlich können auch Warenkennungen über die Eingabeeinrichtung 102 eingegeben werden. Die Kasseneinrichtung 10 speichert die registrierten Waren, addiert die den Waren zugeordneten Einzelbeträge zu einem Gesamtbetrag und gibt gegebenenfalls warenbezogene Informationen sowie einen summierten Betrag über die Anzeigeeinrichtung 103 aus.

Soll ein Bezahlvorgang beendet werden und das Bezahlen der registrierten Waren erfolgen, so kann dies beispielsweise mittels einer geeigneten Eingabe über die Eingabeeinrichtung 102 veranlasst werden, woraufhin die Kasseneinrichtung 10 den Endbetrag über die Anzeigeeinrichtung 103 ausgibt und über die Steuereinrichtung 14 ein Steuersignal in Form eines Steuerpulses erzeugt, der an die Geldlade 11 übertragen wird und ein automatisches Öffnen der Schublade 111 der Geldlade 11 bewirkt. Bei geöffneter Schublade 111 kann dann Bargeld in das Aufbewahrungsfach 112 der Geldlade 11 eingelegt und Wechselgeld einem Kunden herausgegeben werden.

Nach erfolgter Bezahlung schließt ein Bediener die Schublade 111 manuell, so dass ein nächster Bezahlvorgang, im Rahmen dessen wiederum Waren eingelesen und registriert werden, beginnen kann.

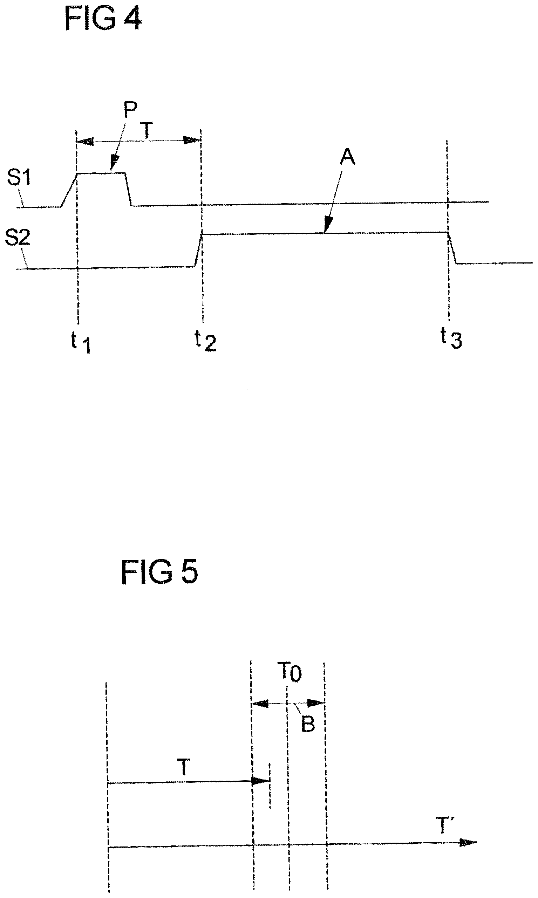

Das automatische Öffnen der Schublade 111 wird durch ein Steuersignal der Steuereinrichtung 14 bewirkt. Ein solches Steuersignal P ist schematisch in Fig. 4 zusammen mit einem Öffnungssignal A der Sensoreinrichtung 13 dargestellt. Das Bezugszeichen S1 bezeichnet hier ein von der Steuereinrichtung 14 ausgegebenes Signal, während das Bezugszeichen S2 ein von der Sensoreinrichtung 13 abgegebenes Sensorsignal angibt. Das Steuersignal P entspricht einem pulsförmig erhöhten Signallevel des Signals S1 der Steuereinrichtung 14, während das Öffnungssignal A einem erhöhten Signallevel des Signals S2 der Sensoreinrichtung 13 entspricht. Mittels des Steuersignals P wird der automatische Öffnungsvorgang der Schublade 111 initiiert. Ist die Schublade 111 geöffnet, gibt die Sensoreinrichtung 13 einen erhöhten Signallevel aus und erzeugt somit das Sensorsignal A.

Die Steuereinrichtung 14 erzeugt das Steuersignal P zu einem Zeitpunkt t1 (Bezug genommen wird auf die ansteigende Flanke des Steuersignals P). Innerhalb einer Zeitspanne T nach dem Steuersignal P, das das automatische Öffnen der Schublade 111 bewirken soll, wird bei einem bestimmungsgemäßen Öffnungsvorgang die Schublade 111 geöffnet, so dass ab dem Zeitpunkt t2 (entsprechend der ansteigenden Flanke des Öffnungssignals A) das Öffnungssignal A anliegt. Zum Zeitpunkt t3 wird die Schublade 111 wieder geschlossen, so dass der Signalpegel des Signals S2 der Sensoreinrichtung 13 abfällt und somit kein Öffnungssignal A mehr abgegeben wird.

Bei einem bestimmungsgemäßen Öffnungsvorgang wird die Zeitspanne T in etwa einer Referenzzeitspanne T0 (siehe Fig. 5) entsprechen, so dass anhand eines Vergleichs der Zeitspanne T mit der vorbestimmten Referenzzeitspanne T0 erkannt werden kann, ob ein Öffnungsvorgang in ordnungsgemäßer Weise durchgeführt wird oder nicht.

Liegt die Zeitspanne T, wie in Fig. 5 dargestellt, innerhalb eines Toleranzbereichs B um die Referenzzeitspanne T0, so kann davon ausgegangen werden, dass der Öffnungsvorgang der Schublade 111 in bestimmungsgemäßer Weise erfolgt ist.

Weicht eine gemessene Zeitspanne T', wie ebenfalls in Fig. 5 dargestellt ist, jedoch deutlich von der Referenzzeitspanne T0 ab und liegt insbesondere außerhalb des Toleranzbereichs B um die Referenzzeitspanne T0, so kann dies darauf hindeuten, dass die Sensoreinrichtung 13 manipuliert worden ist, um beispielsweise ein Schließen der Schublade 111 nach einem erfolgten Bezahlvorgang vorzutäuschen. Dies kann beispielsweise dadurch erfolgt sein, dass ein Bediener einen fremden Gegenstand beispielsweise einem Mikroschalter oder Mikrokontakt der Sensoreinrichtung 13 angenähert und diesen somit betätigt hat, so dass die Sensoreinrichtung 13 kein Öffnungssignal A (mehr) abgegeben hat und die Steuereinrichtung 14 somit fälschlicherweise davon ausgegangen ist, dass die Schublade 111 geschlossen worden ist. Wird der fremde Gegenstand wieder entfernt, liegt wiederum ein Öffnungssignal A an, das jedoch zu einer von der Referenzzeitspanne T0 abweichenden Zeit t1 oder gegebenenfalls auch völlig unabhängig von einem Steuersignal P erscheint. Indem geprüft wird, ob einem Öffnungssignal A ein Steuersignal P mit vorbestimmtem zeitlichen Abstand (+/- einer Toleranz) vorangegangen ist, kann somit erkannt werden, ob ein Öffnungssignal A gegebenenfalls auf einen Manipulationsvorgang hindeutet, was mittels der Steuereinrichtung 14 ausgewertet und gegebenenfalls registriert werden kann.

Die Referenzzeitspanne T0 mit ihrem Toleranzbereich kann auch durch Grenzen eines zulässigen Bereichs angegeben werden. So kann beispielsweise eine Zeitspanne T, die innerhalb eines zulässigen Bereichs liegt, als ordnungsgemäß angesehen werden, während eine Zeitspanne, die außerhalb des zulässigen Bereichs liegt, auf einen Manipulationsvorgang hindeutet.

Die tatsächliche Zeit zwischen einem Steuersignal P und dem Beginn des Öffnungssignals A kann bei einem realen System beispielsweise in einem Bereich zwischen 15 ms und 100 ms, insbesondere zwischen 25 ms und 75 ms, z.B. um 50 ms liegen. Entsprechend kann die Referenzzeitspanne T0 gewählt werden, und es kann beispielsweise dann auf einen Manipulationsvorgang geschlossen werden, wenn die Zeitspanne T z.B. kleiner als 15 ms, vorzugsweise kleiner als 10 ms, und größer als 100 ms, vorzugsweise größer als 250 ms, ist.

Wird ein Manipulationsvorgang erkannt, so kann, initiiert durch die Steuereinrichtung 14, eine entsprechende Gegenmaßnahme eingeleitet werden. So kann die Karteneinrichtung 10 beispielsweise mit einer Überwachungseinrichtung 2 (siehe Fig. 1) zusammenwirken, die mittels der Steuereinrichtung 14 bei Erkennen eines Manipulationsvorgangs angesteuert werden kann, um gegebenenfalls das Kassensystem 1 und dessen Umgebung aufzuzeichnen und einen Manipulationsvorgang auf diese Weise festzuhalten. Ebenso kann die Kasseneinrichtung 10 mit einem Alarmsystem 3 zusammen wirken, das einen akustischen Alarm erzeugen oder Sicherheitspersonal innerhalb oder außerhalb eines Ladengeschäfts in stiller oder lauter Weise alarmieren kann.

Zudem ist möglich, dass die Steuereinrichtung 14 im Zusammenwirken mit einer Kassensoftware der Kasseneinrichtung 10 einen erkannten Manipulationsvorgang einem an der Kasseneinrichtung 10 angemeldeten Bediener zuordnet und auf diese Weise den Manipulationsvorgang protokolliert.

Das Kassensystem 1 kann auch eine Selbstlernfunktion aufweisen. So kann die Steuereinrichtung 14 in selbstlernender Weise erfassen, wenn sich die zum Öffnen der Geldlade 1 bei einem bestimmungsgemäßen Öffnungsvorgang erforderliche Zeit beispielsweise aufgrund eines altersbedingten Verschleißes und aufgrund von altersbedingten Schwergängigkeiten ändert. Die Steuereinrichtung 14 passt die Referenzzeitspanne T0 oder auch einen zulässigen Toleranzbereich B um die Referenzzeitspanne T0 herum in diesem Fall in selbstlernender Weise an, z.B. wenn sie erkennt, dass sich bei normalen, bestimmungsgemäßen Öffnungsvorgängen die zum Öffnen erforderliche Zeit über einen Zeitraum erhöht, so dass ein Fehlalarm aufgrund von Verschleiß oder altersbedingten Schwergängigkeiten nach Möglichkeit vermieden werden kann.

Der der Erfindung zugrunde liegende Gedanke ist nicht auf die vorangehend geschilderten Ausführungsbeispiele beschränkt, sondern lässt sich grundsätzlich auch in gänzlich anders gearteter Weise verwirklichen.

So kann die Geldlade beispielsweise auch auf gänzlich andere Weise, beispielsweise mit einer ein Aufbewahrungsfach verschließenden Klappe oder dergleichen, ausgestaltet sein.

Ebenso kann die Sensoreinrichtung grundsätzlich auf beliebige Weise ausgestaltet sein und ist nicht notwendigerweise durch einen Mikroschalter oder Mikrokontakt verwirklicht.

Der Antrieb zum Öffnen der Geldlade ist grundsätzlich beliebig und kann insbesondere elektromotorisch oder mechanisch unter Verwendung eines mechanischen Energiespeichers, z.B. einer Feder oder dergleichen, ausgestaltet sein.

### Bezugszeichenliste

- 1: Kassensystem
- 10: Kasseneinrichtung
- 100: Aufnahmeschlitz
- 101: Registriereinrichtung
- 102: Eingabeeinrichtung
- 103: Anzeigeeinrichtung
- 11: Geldlade
- 110: Gehäuse
- 111: Schublade
- 112: Aufbewahrungsfach
- 12: Elektrische Datenleitung
- 120: Steckerverbindung
- 121: Pins
- 13: Sensoreinrichtung
- 14: Steuereinrichtung
- 2: Überwachungsvorrichtung
- 3: Alarmsystem
- A: Öffnungssignal
- B: Toleranzbereich
- P: Steuersignal
- T, T': Zeitspanne
- T0: Referenzzeitspanne
- t1, t2, t3: Zeitpunkt
- S1,S2: Signal

## Patentansprüche

1. Kassensystem (1), mit
- einer Kasseneinrichtung (10) zum Durchführen eines Bezahlvorgangs,
- einer Geldlade (11), die ein Aufbewahrungsfach (112) zum Aufbewahren von Geld aufweist, wobei in einem geöffneten Zustand der Geldlade (11) das Aufbewahrungsfach (112) für einen Zugriff geöffnet ist und in einem geschlossenen Zustand der Geldlade (11) das Aufbewahrungsfach (112) geschlossen ist,
- einer Steuereinrichtung (14) zum Steuern der Geldlade (11), wobei die Steuereinrichtung (14) ausgebildet ist, ein Steuersignal (P) zum Öffnen der Geldlade (11) zu erzeugen, und
- einer Sensoreinrichtung (13) zum Erzeugen eines Öffnungssignals (A), das anzeigt, ob die Geldlade (11) sich in ihrem geöffneten Zustand befindet,
**dadurch gekennzeichnet,**
**dass** die Steuereinrichtung (14) ausgebildet ist, auszuwerten, ob einem Öffnungssignal (A) ein Steuersignal (P) mit vorbestimmtem zeitlichen Abstand (T0) vorangegangen ist oder nicht, um anhand der Auswertung einen Manipulationsvorgang beim Öffnen und/oder Schließen der Geldlade (11) zu erkennen, wobei die Steuereinrichtung (14) ausgebildet ist, eine Zeitspanne (T) zwischen einer ansteigenden Flanke eines durch die Sensoreinrichtung (13) erzeugten Öffnungssignals (A) und einer ansteigenden Flanke eines vorangegangenen Steuersignals (P) zum Öffnen der Geldlade (11) zu erfassen und zum Erfassen eines Manipulationsvorgangs mit einer vorbestimmten Referenzzeitpanne (T0) zu vergleichen, wobei die Steuereinrichtung (14) selbstlernend ausgebildet ist, einen Manipulationsvorgang anzuzeigen, wenn eine erfasste Zeitspanne (T) zwischen einem durch die Sensoreinrichtung (13) erzeugten Öffnungssignal (A) und einem vorangegangenen Steuersignal (P) zum Öffnen der Geldlade (11) außerhalb eines zulässigen Toleranzbereichs (B) um die Referenzzeitspanne (T0) liegt, und die Referenzzeitspanne (T0) und/oder einen Toleranzbereich (B) anzupassen, wenn sie über einen Zeitraum eine Veränderung in einem bestimmungsgemäßen Öffnungsvorgang der Geldlade (1) erkennt.

2. Kassensystem (1) nach Anspruch 1, **dadurch gekennzeichnet, dass** die Steuereinrichtung (14) ausgebildet ist, einen Manipulationsvorgang anzuzeigen, wenn einem Öffnungssignal (A) kein Steuersignal (P) unmittelbar vorangegangen ist.

3. Kassensystem (1) nach Anspruch 1 oder 2, **dadurch gekennzeichnet, dass** die Geldlade (11) von der Kasseneinrichtung (10) entnehmbar ist.

4. Kassensystem (1) nach einem der vorangehenden Ansprüche, **dadurch gekennzeichnet, dass** die Geldlade (11) über eine elektrische Datenleitung (12) mit der Kasseneinrichtung (10) verbunden ist.

5. Kassensystem (1) nach Anspruch 4, **dadurch gekennzeichnet, dass** die Steuereinrichtung (14) ausgebildet ist, über die elektrische Datenleitung (12) ein Steuersignal (P) an die Geldlade (11) zu senden und ein Öffnungssignal (A) abzufragen.

6. Kassensystem (1) nach einem der vorangehenden Ansprüche, **dadurch gekennzeichnet, dass** die Steuereinrichtung (14) ausgebildet ist, mit einer Überwachungseinrichtung (2) zusammenzuwirken und bei Erkennen eines Manipulationsvorgangs die Überwachungseinrichtung (2) zum Initiieren eines Überwachungsvorgangs anzusteuern.

7. Kassensystem (1) nach einem der vorangehenden Ansprüche, **dadurch gekennzeichnet, dass** die Steuereinrichtung (14) ausgebildet ist, bei Erkennen eines Manipulationsvorgangs ein Alarmsystem (3) zum Erzeugen eines Alarms anzusteuern.

8. Verfahren zum Betreiben eines Kassensystems (1), das
- eine Kasseneinrichtung (10) zum Durchführen eines Bezahlvorgangs und
- eine Geldlade (11), die ein Aufbewahrungsfach (112) zum Aufbewahren von Geld aufweist, wobei in einem geöffneten Zustand der Geldlade (11) das Aufbewahrungsfach (112) für einen Zugriff geöffnet ist und in einem geschlossenen Zustand der Geldlade (11) das Aufbewahrungsfach (112) geschlossen ist,
umfasst, wobei eine Steuereinrichtung (14) ein Steuersignal (P) zum Öffnen der Geldlade (11) erzeugt und eine Sensoreinrichtung (13) ein Öffnungssignals (A) erzeugt, das anzeigt, ob die Geldlade (11) sich in ihrem geöffneten Zustand befindet,
**dadurch gekennzeichnet,**
**dass** die Steuereinrichtung (14) auswertet, ob einem Öffnungssignal (A) ein Steuersignal (P) mit vorbestimmtem zeitlichen Abstand (T0) vorangegangen ist oder nicht, um anhand der Auswertung einen Manipulationsvorgang beim Öffnen und/oder Schließen der Geldlade (11) zu erkennen, wobei die Steuereinrichtung (14) eine Zeitspanne (T) zwischen einer ansteigenden Flanke eines durch die Sensoreinrichtung (13) erzeugten Öffnungssignals (A) und einer ansteigenden Flanke eines vorangegangenen Steuersignals (P) zum Öffnen der Geldlade (11) erfasst und zum Erfassen eines Manipulationsvorgangs mit einer vorbestimmten Referenzzeitpanne (T0) vergleicht, wobei die Steuereinrichtung (14) einen Manipulationsvorgang anzeigt, wenn eine erfasste Zeitspanne (T) zwischen einem durch die Sensoreinrichtung (13) erzeugten Öffnungssignal (A) und einem vorangegangenen Steuersignal (P) zum Öffnen der Geldlade (11) außerhalb eines zulässigen Toleranzbereichs (B) um die Referenzzeitspanne (T0) liegt und die Steuereinrichtung selbstlernend ausgebildet ist, die Referenzzeitspanne (T0) und/oder einen Toleranzbereich (B) anzupassen, wenn sie über einen Zeitraum eine Veränderung in einem bestimmungsgemäßen Öffnungsvorgang der Geldlade (1) erkennt.

## Claims

1. Cash register system (1), having
- a cash register device (10) for performing a payment transaction,
- a cash drawer (11), which has a storage compartment (112) for storing cash, the storage compartment (112) being open for access in an open state of the cash drawer (11) and the storage compartment (112) being closed in a closed state of the cash drawer (11),
- a control device (14) for controlling the cash drawer (11), the control device (14) being designed to generate a control signal (P) to open the cash drawer (11), and
- a sensor device (13) for generating an open signal (A) that indicates whether the cash drawer (11) is in its open state,
**characterized**
**in that** the control device (14) is designed to evaluate whether or not an open signal (A) has been preceded by a control signal (P) at a predetermined interval of time (T0), in order to take the evaluation as a basis for detecting a manipulation process during the opening and/or closing of the cash drawer (11), the control device (14) being designed to record a time period (T) between a rising edge of an open signal (A) generated by the sensor device (13) and a rising edge of a preceding control signal (P) for opening the cash drawer (11) and to detect a manipulation process by comparing said time period with a predetermined reference time period (T0), the control device (14) being designed self-learning to indicate a manipulation process if a recorded time period (T) between an open signal (A) generated by the sensor device (13) and a preceding control signal (P) for opening the cash drawer (11) is outside an admissible tolerance range (B) around the reference time period (T0), and to adjust the reference time period (T0) and/or a tolerance range (B), if it detects a change in an intended opening process for the cash drawer (1) over a period of time.

2. Cash register system (1) according to Claim 1, **characterized in that** the control device (14) is designed to indicate a manipulation process if an open signal (A) has not been immediately preceded by a control signal (P) .

3. Cash register system (1) according to Claim 1 or 2, **characterized in that** the cash drawer (11) is removable from the cash register device (10).

4. Cash register system (1) according to one of the preceding claims, **characterized in that** the cash drawer (11) is connected to the cash register device (10) by way of an electrical data line (12).

5. Cash register system (1) according to Claim 5, **characterized in that** the control device (14) is designed to use the electrical data line (12) to send a control signal (P) to the cash drawer (11) and to request an open signal (A).

6. Cash register system (1) according to one of the preceding claims, **characterized in that** the control device (14) is designed to interact with a monitoring device (2) and to respond to detection of a manipulation process by driving the monitoring device (2) to initiate a monitoring process.

7. Cash register system (1) according to one of the preceding claims, **characterized in that** the control device (14) is designed to respond to detection of a manipulation process by driving an alarm system (3) to produce an alarm.

8. Method for operating a cash register system (1) that comprises
- a cash register device (10) for performing a payment transaction and
- a cash drawer (11), which has a storage compartment (112) for storing cash, the storage compartment (112) being open for access in an open state of the cash drawer (11) and the storage compartment (112) being closed in a closed state of the cash drawer (11),
wherein a control device (14) generates a control signal (P) to open the cash drawer (11) and a sensor device (13) generates an open signal (A) that indicates whether the cash drawer (11) is in its open state,
**characterized**
**in that** the control device (14) evaluates whether or not an open signal (A) has been preceded by a control signal (P) at a predetermined interval of time (T0), in order to take the evaluation as a basis for detecting a manipulation process during the opening and/or closing of the cash drawer (11), the control device (14) being designed to record a time period (T) between a rising edge of an open signal (A) generated by the sensor device (13) and a rising edge of a preceding control signal (P) for opening the cash drawer (11) and to detect a manipulation process by comparing said time period with a predetermined reference time period (T0), the control device (14) indicating a manipulation process if a recorded time period (T) between an open signal (A) generated by the sensor device (13) and a preceding control signal (P) for opening the cash drawer (11) is outside an admissible tolerance range (B) around the reference time period (T0) and the control device being designed self-learning to adjust the reference time period (T0) and/or a tolerance range (B), if it detects a change in an intended opening process for the cash drawer (1) over a period of time.

## Revendications

1. Système de caisse (1) comprenant
- un dispositif de caisse (10) destiné à réaliser une opération de paiement,
- un tiroir de caisse (11), qui possède un compartiment de conservation (112) destiné à conserver de l'argent, le compartiment de conservation (112) étant ouvert pour un accès dans un état ouvert du tiroir de caisse (11) et le compartiment de conservation (112) étant fermé dans un état fermé du tiroir de caisse (11),
- un dispositif de commande (14) destiné à commander le tiroir de caisse (11), le dispositif de commande (14) étant configuré pour générer un signal de commande (P) servant à ouvrir le tiroir de caisse (11), et
- un dispositif capteur (13) destiné à générer un signal d'ouverture (A), lequel indique si le tiroir de caisse (11) se trouve dans son état ouvert,
**caractérisé en ce**
**que** le dispositif de commande (14) est configuré pour évaluer si un signal de commande (P) a précédé ou non un signal d'ouverture (A) avec un intervalle de temps (T0) prédéterminé, afin de reconnaître, à l'aide de l'évaluation, une opération de manipulation lors de l'ouverture et/ou de la fermeture du tiroir de caisse (11), le dispositif de commande (14) étant configuré pour détecter une durée (T) entre un front montant d'un signal d'ouverture (A) généré par le dispositif capteur (13) et un front montant d'un signal de commande (P) précédent destiné à l'ouverture du tiroir de caisse (11) et le comparer avec une durée de référence (T0) prédéterminée en vue de détecter une opération de manipulation, le dispositif de commande (14) étant configuré à autoapprentissage pour signaler une opération de manipulation lorsqu'une durée (T) détectée entre un signal d'ouverture (A) généré par le dispositif capteur (13) et un signal de commande (P) précédent destiné à l'ouverture du tiroir de caisse (11) se trouve en dehors d'une plage de tolérance (B) admissible autour de la durée de référence (T0), et pour adapter la durée de référence (T0) et/ou une plage de tolérance (B) lorsqu'il reconnaît, sur une période donnée, une modification dans une opération d'ouverture du tiroir de caisse (1) conforme à l'usage prévu.

2. Système de caisse (1) selon la revendication 1, **caractérisé en ce que** le dispositif de commande (14) est configuré pour signaler une opération de manipulation lorsqu'aucun signal de commande (P) n'a précédé directement un signal d'ouverture (A).

3. Système de caisse (1) selon la revendication 1 ou 2, **caractérisé en ce que** le tiroir de caisse (11) peut être retiré du dispositif de caisse (10).

4. Système de caisse (1) selon l'une des revendications précédentes, **caractérisé en ce que** le tiroir de caisse (11) est relié au dispositif de caisse (10) par le biais d'une ligne de données électrique (12).

5. Système de caisse (1) selon la revendication 5, **caractérisé en ce que** le dispositif de commande (14) est configuré pour, par le biais de la ligne de données électrique (12), envoyer un signal de commande (P) au tiroir de caisse (11) et interroger un signal d'ouverture (A) .

6. Système de caisse (1) selon l'une des revendications précédentes, **caractérisé en ce que** le dispositif de commande (14) est configuré pour interagir avec un dispositif de surveillance (2) et, en cas de reconnaissance d'une opération de manipulation, commander le dispositif de surveillance (2) en vue d'initier une opération de surveillance.

7. Système de caisse (1) selon l'une des revendications précédentes, **caractérisé en ce que** le dispositif de commande (14) est configuré pour, en cas de reconnaissance d'une opération de manipulation, commander un système d'alarme (3) en vue de générer une alarme.

8. Procédé pour faire fonctionner un système de caisse (1), qui comporte
- un dispositif de caisse (10) destiné à réaliser une opération de paiement et
- un tiroir de caisse (11), qui possède un compartiment de conservation (112) destiné à conserver de l'argent, le compartiment de conservation (112) étant ouvert pour un accès dans un état ouvert du tiroir de caisse (11) et le compartiment de conservation (112) étant fermé dans un état fermé du tiroir de caisse (11), un dispositif de commande (14) générant un signal de commande (P) servant à ouvrir le tiroir de caisse (11) et un dispositif capteur (13) générant un signal d'ouverture (A), lequel indique si le tiroir de caisse (11) se trouve dans son état ouvert,
**caractérisé en ce**
**que** le dispositif de commande (14) évalue si un signal de commande (P) a précédé ou non un signal d'ouverture (A) avec un intervalle de temps (T0) prédéterminé, afin de reconnaître, à l'aide de l'évaluation, une opération de manipulation lors de l'ouverture et/ou de la fermeture du tiroir de caisse (11), le dispositif de commande (14) détectant une durée (T) entre un front montant d'un signal d'ouverture (A) généré par le dispositif capteur (13) et un front montant d'un signal de commande (P) précédent destiné à l'ouverture du tiroir de caisse (11) et le comparant avec une durée de référence (T0) prédéterminée en vue de détecter une opération de manipulation, le dispositif de commande (14) signalant une opération de manipulation lorsqu'une durée (T) détectée entre un signal d'ouverture (A) généré par le dispositif capteur (13) et un signal de commande (P) précédent destiné à l'ouverture du tiroir de caisse (11) se trouve en dehors d'une plage de tolérance (B) admissible autour de la durée de référence (T0) et le dispositif de commande étant configuré à autoapprentissage pour adapter la durée de référence (T0) et/ou une plage de tolérance (B) lorsqu'il reconnaît, sur une période donnée, une modification dans une opération d'ouverture du tiroir de caisse (1) conforme à l'usage prévu.
